# EUROPÄISCHE PATENTANMELDUNG

(11) **EP 0 646 749 A1**
(43) Veröffentlichungstag der Anmeldung: **05.04.1995**
(21) Anmeldenummer: 94113102.1
(22) Anmeldetag: 23.08.1994
(51) Int. Cl.: F21V 33/00, G03B 21/58

(54) **Stehlampe mit integrierter Bildwand**

(30) Priorität: 07.09.1993 DE 9313479 U; 05.01.1994 DE 9400030 U
(71) Anmelder: REFLECTA GMBH FOTO FILM PROJEKTION, D-91126 Schwabach (DE)
(72) Erfinder: Junge, Gerhard, D-91189 Regelsbach (DE)
(74) Vertreter: LOUIS, PÖHLAU, LOHRENTZ & SEGETH

(57) **Zusammenfassung**

Es wird eine Stehlampe mit einem Ständer (2, 4) und mindestens einer an dem Ständer befestigten Leuchte (5) beschrieben, wobei an dem Ständer (2) eine Bildwandtrommel (4) befestigt ist, die zur Aufnahme einer Bildwand (43) zum Vorführen von Filmen, Dias u.dgl. bestimmt ist. Die Bildwandtrommel (4) bildet einen integralen Teil des Ständers (2).

## Beschreibung

Eine verstaubare Bildwand zum Vorführen von Filmen, Diapositiven u.dgl. ist heutzutage in vielen Haushalten ein fester Bestandteil. Eine solche verstaubare und transportable Bildwand weist einen Ständer auf, an dem eine Bildwandtrommel zur Aufnahme der Bildwand im verstauten Zustand befestigt ist. Die Bildwandtrommel enthält eine federbelastete Spannwalze, gegen deren Aufwickelrichtung die Bildwand mit ihrem oberen Hänge-Querträger aus der Bildwandtrommel ausgezogen und an einer Einhängevorrichtung am oberen Ende des Ständers befestigt, z.B. eingehängt oder mit einem Schnell-Schraubverschluß angeschraubt werden kann. Der Fuß des Ständers ist normalerweise als nach Art eines Stativs in eine Nichtgebrauchslage schwenkbares Dreibein gestaltet, um das Gewicht der Gesamtanordnung für die manuelle Handhabung beim Aufstellen und Wegräumen möglichst gering zu halten. Um den Platzbedarf der Gesamtanordnung im verstauten Zustand klein zu halten, ist die Bildwandtrommel an dem Ständer um eine quer zum Ständer verlaufende, angenähert horizontale Achse in eine Lage verschwenkbar, in der sie etwa parallel zum Ständer angeordnet ist.

Das Herbeiholen, Aufstellen und nach der Vorführung notwendige erneute Wegräumen einer Bildwand-Anordnung dieser Art wird häufig als lästig empfunden. Es ist jedoch notwendig, da einerseits die eigentliche Bildwand empfindlich ist und daher vor Beschädigungen geschützt aufbewahrt werden muß, andererseits in den meisten Wohnungen kein gesonderter Vorführraum zur Verfügung steht, der ausschließlich der Vorführung von Filmen, Diapositiven u.dgl. dient und in dem deshalb die Bildwand gefahrlos unverstaut verbleiben könnte. Da die bekannten Bildwand-Anordnungen auf Grund ihres technischen Erscheinungsbildes von vielen Menschen als unwohnlich und daher zum ständigen Verbleib im eigentlichen Wohnbereich ungeeignet angesehen werden, ist es üblich, sie außerhalb des Wohnbereichs in einem Stellraum, Vorratsraum o.dgl. aufzubewahren. Dies erhöht den als lästig empfundenen Aufwand beim Aufstellen und Wegräumen der Bildwand-Anordnung noch mehr, weshalb die Vorführung von Filmen und Diapositiven in Haushalten seltener stattfindet, als dies eigentlich wünschenswert wäre.

Aufgabe der Erfindung ist es daher, eine Bildwand-Anordnung so zu gestalten, daß sie ohne Beeinträchtigung eines wohnlichen Erscheinungsbildes ständig griffbereit im Wohnbereich aufbewahrt werden kann.

Zur Lösung dieser Aufgabe schlägt die Erfindung eine Stehlampe vor, an deren Ständer eine Bildwandtrommel befestigt ist, die einen integralen Teil des Ständers der Stehlampe bildet.

Der Erfindung liegt die Überlegung zugrunde, daß einerseits eine Stehlampe ein häufiges wenn nicht übliches Requisit im Wohnbereich von Wohnungen ist, andererseits die Bildwandtrommel einer Bildwand-Anordnung der vorstehend geschilderten Art aufgrund ihrer üblichen schlanken Ausführung und Länge dazu herangezogen werden kann, als Ständer für die Leuchte oder Leuchten der Stehlampe zu dienen oder zumindest aussehensmäßig einen Bestandteil davon zu bilden. Stehlampen haben üblicherweise einen relativ schweren Fuß, der hinreichende Standfestigkeit für den Ständer und die an dessen oberem Abschnitt angebrachte Leuchte oder Leuchten vermittelt. Alle diese Komponenten einer Stehlampe haben herkömmlicherweise ein Design, das den unterschiedlichsten Geschmacksrichtungen entspricht, und werden deshalb als wohnlich und ansprechend im unmittelbaren Wohnbereich empfunden. Durch die erfindungsgemäße Ausgestaltung einer Stehlampe, die eine Bildwandtrommel als integralen Bestandteil der Stehlampe aufweist und wobei die Bildwandtrommel entsprechend geschmacklich ausgestaltet ist, wird das als zu technisch betrachtete Erscheinungsbild der herkömmlichen Bildwand-Anordnungen vermieden. Das Dreibein-Stativ wird ersetzt durch den ohnehin erforderlichen Fuß einer Stehlampe; dem Ständer fügt sich die bildwandtrommel - im verstauten Zustand der Bildwand - designmäßig ein und bildet gegebenenfalls technisch einen funktionellen Bestandteil davon. Ebensowenig wie eine Stehlampe zum Zweck der Benutzung erst aufgestellt und nach Benutzung wieder weggeräumt werden muß, kann nunmehr eine Bildwand ständig im Wohnbereich verbleiben. Es ist lediglich notwendig, die Bildwand aus der Bildwandtrommel zum Zweck der Benutzung herauszuziehen und in dieser nach der Benutzung wieder aufwickeln zu lassen.

Für die Ausgestaltung der Stehlampe mit integrierter Bildwand nach der vorliegenden Erfindung gibt es verschiedene Möglichkeiten:
Gemäß einer bevorzugten Ausführungsform ist vorgesehen, daß die Bildwandtrommel mit dem Ständer mittels zweier Verbindungshebel zwischen einer im verstauten Zustand der Bildwand parallel zum Ständer orientierten Lagerstellung und einer quer zum Ständer orientierten Benutzungsstellung verschwenkbar verbunden ist, wobei die beiden Verbindungshebel am Ständer derartig angeordnet sind, daß die Bildwandtrommel in der Benutzungsstellung von dem in der Lagerstellung der Bildwandtrommel festgelegten Mittelpunkt nach unten verlagert ist. Durch eine solche Ausbildung ist es möglich, eine Bildwand mit entsprechenden Abmessungen, die bspw. 120 cm x 120 cm betragen können, mit der Bildwandtrommel in einen entsprechenden Ständer zu integrieren, ohne daß die Bildwand in der aus der Bildwandtrommel herausbewegten Benutzungsstellung vom Boden zu weit nach oben entfernt wäre.

Bei einer erfindungsgemäßen Stehlampe der zuletzt genannten Art hat es sich als zweckmäßig erwiesen, wenn die beiden Verbindungshebel ungleich lang sind und ihre Befestigungsachsen, mit welchen sie am Ständer schwenkbeweglich angeordnet sind, voneinander beabstandet sind. Die beiden Verbindungshebel bilden mit der Bildwandtrommel und dem Ständer der erfindungsgemäßen Stehlampe ein sog. Viergelenkgetriebe, mit welchem es einfach möglich ist, die Bildwandtrommel zwischen der zusammengeschwenkten Lagerstellung und der Benutzungsstellung hin- und herzuverschwenken.

Um die Bildwandtrommel bei einer solchen Stehlampe der zuletzt genannten Art in der Benutzungsstellung genau definiert festzulegen, ist es vorteilhaft, wenn zwischen einem der Verbindungshebel und dem Ständer ein die Verschwenkbewegung der Bildwandtrommel begrenzender und ihre Benutzungsstellung festlegender Anschlaghebel vorgesehen ist. Dieser Anschlaghebel kann am Ständer um eine Befestigungsachse verschwenkbar angeordnet und am zugehörigen Verbindungshebel linear beweglich geführt sein. Selbstverständlich wäre es auch möglich, den Anschlaghebel am besagten Verbindungshebel um eine Befestigungsachse verschwenkbar anzuordnen und am Ständer linear beweglich zu führen. Die Verschwenkbewegung der Bildwandtrommel zwischen der zusammengeschwenkten Lagerstellung und der aufgeschwenkten, d.h. zum Ständer senkrecht orientierten, horizontalen Benutzungsstellung der Bildwandtrommel wird hierbei zweckmäßigerweise durch eine Linearführung realisiert, die mit mindestens einem Endanschlag zur Festlegung der aufgeschwenkten Benutzungsstellung versehen ist. Selbstverständlich ist es auch möglich, die zuletzt erwähnte Linearführung mit einem zweiten Endanschlag zu versehen, der die Schwenkbewegung der Bildwandtrommel in der zusammengeschwenkten Lagerstellung festlegt.

Es ist auch möglich, daß bei der erfindungsgemäßen Stehlampe die Bildwandtrommel in an sich bekannter Weise um eine horizontale Achse schwenkbar an dem Ständer der Stehlampe derart befestigt ist, daß sie sich im Benutzungszustand der Bildwand quer zu dem Ständer erstreckt. Die Befestigungsstelle der Bildwandtrommel ist dabei zweckmäßigerweise an dem Ständer zwischen dessen Fuß und dem oberen Ständerende vorgesehen und im oberen Ständerabschnitt ist eine Befestigungsvorrichtung zum Befestigen der Bildwand in dem ausgezogenen Zustand angeordnet. Es versteht sich, daß diese Befestigungsvorrichtung geschmacklich so gestaltet ist, daß sie in das Design der Stehlampe paßt. So ist es möglich, die Befestigungsvorrichtung als Einhängevorrichtung mit einer oder mehreren Ausnehmungen am oberen Ständerabschnitt zu gestalten, in die der obere Hängeträger der Bildwand eingehängt werden kann. Um auch eine gegenüber der Vertikalen geneigte Anordnung der Bildwand zu ermöglichen, ist es von Vorteil, den oberen Ständerabschnitt, der die Befestigungsvorrichtung aufweist, in einer zu der Bildwandebene annähernd senkrechten Ebene schwenkbar an dem Ständer zu befestigen, so daß er in mindestens einer Schwenkstellung und in einer mit dem Ständer fluchtenden Stellung verrastet werden kann. Da auch bei Stehlampen häufig eine Schwenkbarkeit der Leuchte bzw. der Leuchten vorgesehen ist, um die Lichtwirkung verändern zu können, geht diese technische Möglichkeit mit dem Bedürfnis, die Bildwand auch geneigt aufhängen zu können, konform und wird nicht als unwohnlich technisch angesehen, wenn der die Befestigungsvorrichtung aufweisende schwenkbare obere Ständerabschnitt zugleich die Leuchte oder Leuchten trägt.

Die Bildwandtrommel kann die Stützfunktion des Ständers in der parallel zum Ständer ausgerichteten Schwenklage unterstützen, wenn sie in ihrer etwa parallel zum Ständer ausgerichteten Schwenklage auf dem Ständerfuß aufsteht oder sogar in eine am Ständerfuß vorgesehene Ausnehmung eingefügt ist. Wenn diese Ausnehmung, z.B. aus geschmacklichen Gründen, nur von oben her zugänglich ist, ist es notwendig, in an sich bekannter Weise den Befestigungspunkt der Bildwandtrommel an dem Ständer längs dem Ständer verstellbar zu machen.

Die Leuchte muß nicht notwendig am Ständer der Stehlampe befestigt sein, sondern auch die Bildwandtrommel kann als Leuchtenträger dienen. So ist es möglich, die Leuchte bspw. an demjenigen Ende der Bildwandtrommel anzuordnen, das in der parallel zum Ständer geschwenkten Lage der Bildwandtrommel sich oben befindet. Auch eine Mehrfachanordnung von Leuchten längs der Bildwandtrommel ist möglich, wobei in beiden Fällen darauf geachtet werden muß, daß im ausgezogenen und aufgespannten Zustand der Bildwand die Leuchten außerhalb der Bildwandebene liegen, um Beschädigungen zu vermeiden.

Bei der Ausführungsform, die eine Anordnung der Leuchte oder Leuchten an der Bildwandtrommel vorsieht, liegt auch eine nicht schwenkbare Befestigung der Bildwandtrommel an dem Ständer der Stehlampe im Rahmen der Erfindung. In diesem Fall, in welchem aus geschmacklichen Gründen die Bildwandtrommel als Träger für die Leuchten verhältnismäßig niedrig angebracht sein wird, dient der vorstehend bereits erwähnte schwenkbare obere Ständerabschnitt allein als Träger für die Befestigungsvorrichtung zum Einhängen der Bildwand im Benutzungszustand und kann bei Nichtbenutzung in eine Stellung, z.B. parallel zum unteren Ständerabschnitt geschwenkt werden, in der er ebenfalls einen Teil der Stützfunktion des Ständers übernimmt.

Weitere Vorteile und Merkmale der Erfindung ergeben sich aus der nachfolgenden Beschreibung eines bevorzugten Ausführungsbeispiels anhand der beiliegenden Zeichnungen sowie aus weiteren Unteransprüchen. In den Zeichnungen zeigen:
- Fig. 1: eine erfindungsgemäße Stehlampe mit bildwand in der Benutzungslage der Bildwand;
- Fig. 2: die Stehlampe gemäß Fig. 1 in der Nichtgebrauchslage der Bildwand;
- Fig. 3: eine zu Fig. 1 analoge Darstellung in der Seitenansicht;
- Fig. 4: eine zu Fig. 2 analoge Darstellung in der Seitenansicht, und
- Fig. 5: eine Ansicht einer bevorzugten Ausführungsform der Stehlampe in Blickrichtung von hinten.

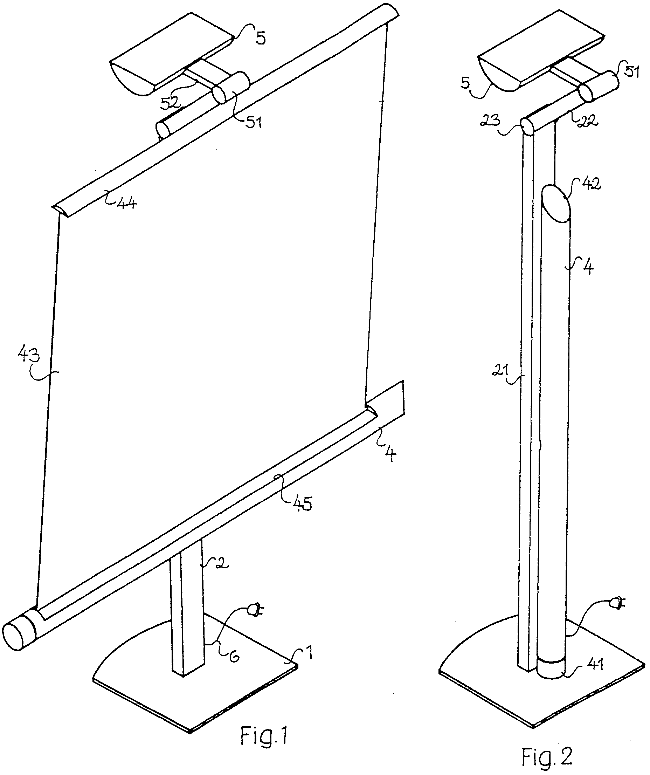

Eine erfindungsgemäße Stehlampe mit integrierter Bildwand gemäß den Figuren 1 bis 4 besteht im wesentlichen aus einem Fuß 1, einem an dem Fuß 1 befestigten Ständer 2, einer mittels eines Drehgelenks 3 an dem Ständer 2 schwenkbar angebrachten Bildwandtrommel 4 und einer im oberen Abschnitt des Ständers 2 befestigten Dekoleuchte 5. Die Stehlampe ist über eine nur angedeutete elektrische Leitung 6 mit Stecker an einer Steckdose anschließbar. In diesem Fall verläuft die elektrische Verkabelung im Inneren des Ständers 2.

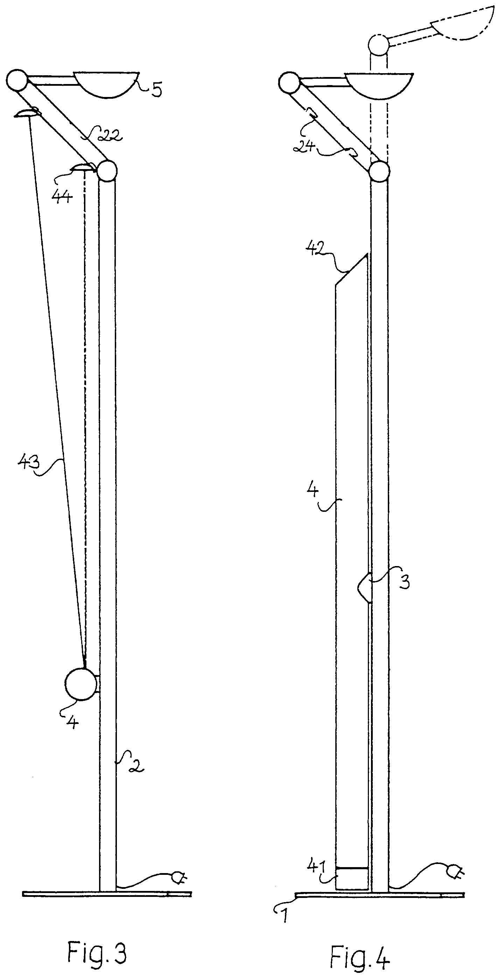

Der Fuß 1 ist durch eine relativ schwere Metallplatte, z.B. aus Eisen, gebildet, die hinreichend groß ist, um auch in dem aufgespannten Zustand der Bildwand eine sichere Halterung zu gewährleisten. Der Ständer der Stehlampe wird in dem verstauten Zustand der Bildwand (Fig. 2) durch ein fest mit dem Fuß 1 verbundenes Vierkantrohr sowie durch die Bildwandtrommel gebildet. Wie aus Fig. 4 hervorgeht, stützt sich das untere Ende 41 der Bildwandtrommel 4 auf der flachen Oberseite des Fußes 1 ab und trägt damit zur Standsicherheit des Ständers 2 bei. Das obere Ende 42 der Bildwandtrommel 4 ist aus geschmacklichen Gründen nach vorne abgeschrägt. Der Ständer 2 ist unterteilt in einen unteren Ständerabschnitt 21 und einen oberen Ständerabschnitt 22, der mit dem unteren Ständerabschnitt 21 über ein Schwenkgelenk 23 so verbunden ist, daß er sowohl in der mit dem unteren Ständerabschnitt 21 fluchtenden Schwenkstellung (vgl. Fig. 4, in der diese Schwenkstellung gestrichelt eingezeichnet ist) als auch in mindestens einer dazu geneigten Schwenkstellung (vgl. Fig. 3) verrastet werden kann. Einrastbare Schwenkgelenke dieser Art sind bekannt und bedürfen an dieser Stelle keiner ins einzelne gehenden Erläuterung. Der obere Ständerabschnitt 22 besteht aus einem flachen Vierkantprofil und weist an seiner Vorderseite zwei nach vorne offene Ausnehmungen 24 auf, in welche - wie nachfolgend noch erläutert wird - der obere Hängeträger der Bildwand eingehängt werden kann.

Am oberen Ende des oberen Ständerabschnitts 22 ist wiederum stufenlos oder in mehreren Stellungen verrastbar mittels eines Schwenkgelenkes 51 ein Leuchtenträger 52 befestigt, der durch ein hohles Rechteckprofil gebildet ist und durch den hindurch die elektrische Zuleitung für die Leuchte 5 führt. Wenn die Leuchte 5 mit einer Niederspannungs-Halogenlampe bestückt ist, kann der erforderliche Transformator (nicht gezeigt) mit dem Leuchtenträger 52 eine bauliche Einheit bilden.

Ohne daß dies näher dargestellt ist, versteht es sich, daß die Bildwandtrommel 4 eine federbelastete Spannwalze enthält, die zur Aufwickelung der Bildwand 43 dient und gegen deren Wickelkraft die Bildwand 43 aus der Bildwandtrommel 4 herausgezogen werden kann. Hierzu ist der obere Hängeträger 44 der Bildwand 43 als Griffmulde ausgebildet und so gestaltet, daß er im aufgewickelten Zustand der Bildwand 43 einen Teil der zylindrisch gekrümmten Außenfläche der Bildwandtrommel 4 bildet. In diesem Zustand stützen sich die beiden Längsränder des Hängeträgers 44 an den zugeordneten Rändern einer in der Bildwandtrommel 4 vorgesehenen Öffnung 45 ab. Infolge dieser Gestaltung erhält die bildwandtrommel 4 im verstauten Zustand der Bildwand 43 ein schlankes Erscheinungsbild, das nicht durch ein Überstehen des Hängeträgers 44 gestört ist und sich daher günstig auf das Aussehen des Ständers der Stehlampe auswirkt.

Das Drehgelenk 3, mit welchem die Bildwandtrommel 4 an dem Ständer 2 befestigt ist, läßt sich längs einer nicht dargestellten Längsnut in dem Ständer 2 verschieben und - z.B. durch eine nicht gezeigte Klemmschraube - fixieren. Dadurch kann einerseits im aufgespannten Zustand der Bildwand 43 (Fig. 1 und 3) die Bildwand gespannt werden, andererseits kann die Bildwandtrommel 4 nach dem Aufwickeln der Bildwand 43 um 90° in die in den Fig. 2 und 4 gezeigte Nichtbenutzungslage zunächst verschwenkt und anschließend mit dem unteren Ende 41 auf den Fuß 1 aufgesetzt werden.

In dem in den Fig. 2 und 4 gezeigten Zustand hat die Stehlampe ausschließlich Beleuchtungsfunktion. Da Fuß 1, Ständer 2 mit Bildwandtrommel 4 und Leuchte 5 geschmacklich so gestaltet sind, daß der übliche Eindruck einer Stehlampe vermittelt wird, wird der Benutzer diese Stehlampe im Wohnbereich stehen haben. Ist eine Vorführung von Filmen oder Diapositiven geplant, so braucht nur die Bildwandtrommel 4 um 90° in die aus den Fig. 1 und 3 ersichtliche Schwenkstellung verbracht zu werden. Daraufhin kann die Bildwand 43 durch Ergreifen des als Griffmulde gestalteten Hängeträgers 44 aus der Bildwandtrommel 4 herausgezogen werden. Abhängig davon, ob eine vertikale oder geneigte Lage der Bildwand 43 gewünscht ist, wird der Hängeträger 44 mit seinem hinteren Rand in eine der beiden Ausnehmungen 24 eingehängt. Durch Verstellen der Bildwandtrommel 4 in der erwähnten, in der Zeichnung nicht dargestellten Längsnut nach unten ist es nun in bekannter Weise möglich, die Bildwand 43 zu spannen. Ohne eine solche Verstellung kann ein Spannen der Bildwand 43 auch dadurch erfolgen, daß der obere Ständerabschnitt 22 aus einer zuvor stärker geneigten Raststellung in eine schwächer geneigte Raststellung zurückgeschwenkt wird. Das macht es möglich, gegebenenfalls auf eine Längsverstellung des Drehgelenks 3 an dem Ständer 2 zu verzichten.

Im Rahmen der Erfindung können mannigfaltige Abweichungen von dem vorstehend beschriebenen Ausführungsbeispiel vorgenommen werden. So ist es keinesfalls erforderlich, daß die Bildwandtrommel 4 eine mechanische Unterstützung der Stützfunktion des Ständers 2 ergibt. Vielmehr ist es ausreichend, wenn sie sich rein aussehensmäßig als Bestandteil des Ständers 2 darstellt. Weiterhin kann anstelle der gezeigten Ausnehmungen 24 zum Einhängen des Hängeträgers 44 jede andere Befestigungsart gewählt werden, z.B. eine Befestigungsöffnung an dem oberen Ständerabschnitt 22 für eine Bildwandschraube. Der Fuß 1 der Stehlampe kann überdies lösbar mit dem Ständer 2 verbunden und außerdem auch gegebenenfalls noch aus trennbaren Einzelteilen aufgebaut sein, um den Transport zu erleichtern. Im übrigen versteht es sich, daß die Oberflächen sämtlicher Komponenten der Stehlampe geschmacklich, z.B. farblich, so gestaltet sind, wie dies bei Stehlampen üblich ist.

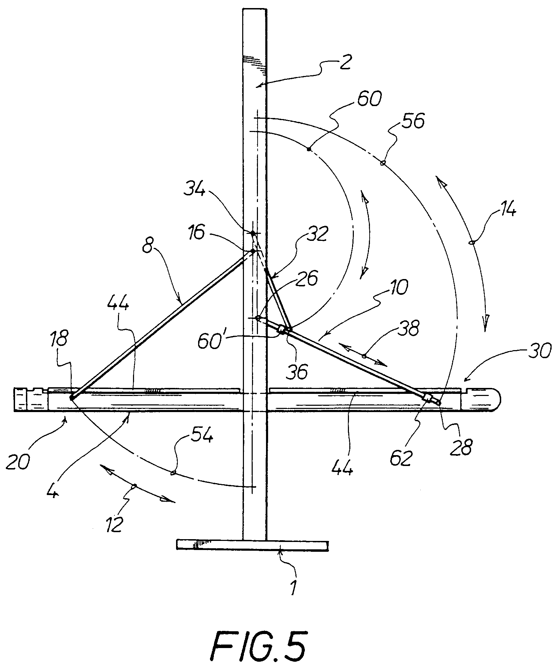

Fig. 5 zeigt in Blickrichtung von hinten eine bevorzugte Ausbildung der erfindungsgemäßen Stehlampe mit einem Ständer 2, der von einem Fuß 1 nach oben steht. Am Ständer 2 ist eine Bildwandtrommel 4 angeordnet, die mit dem Ständer 2 mittels zweier Verbindungshebel 8 und 10 zwischen einer im verstauten Zustand der in der Bildwandtrommel 4 vorgesehenen Bildwand parallel zum Ständer 2 orientierten Lagerstellung und einer quer zum Ständer 2 orientierten Benutzungsstellung verschwenkbar verbunden ist. Diese Verschwenkbarkeit des Verbindungshebels 8 ist durch den bogenförmigen Pfeil 12 und diese Verschwenkbarkeit des Verbindungshebels 10 ist durch den bogenförmigen Pfeil 14 angedeutet. Der Verbindungshebel 8 ist mit seinem einen Ende mittels einer Befestigungsachse 16 am Ständer 2 verschwenkbar angeordnet. Das zweite Ende des Verbindungshebels 8 ist mittels einer zur Befestigungsachse 16 parallel orientierten Befestigungsachse 18 am einen Endabschnitt 20 der Bildwandtrommel 4 verschwenkbar festgelegt. Der Verbindungshebel 10 ist mit seinem einen Ende mittels einer zu den Befestigungsachsen 16 und 18 parallelen Befestigungsachse 26 am Ständer 2 und mit seinem zweiten Ende mittels einer zur Befestigungsachse 26 und somit zu den Befestigungsachsen 16 und 18 parallel orientierten Befestigungsachse 28 am gegenüberliegenden zweiten Endabschnitt 30 der Bildwandtrommel 4 verschwenkbar festgelegt. Die beiden Verbindungshebel 8 und 10 sind ungleich lang, so daß die beiden Befestigungsachsen 16 und 26 in axialer Richtung des Ständers 2 voneinander beabstandet sind. Damit sich die beiden Verbindungshebel 8 und 10 im verstauten, d.h. zusammengeschwenkten Lagerzustand der Stehlampe nicht gegenseitig behindern, ist es zweckmäßig, wenn die beiden zuletzt genannten Befestigungsachsen 16 und 26 quer zur Längsrichtung des Ständers 2 gegeneinander seitlich versetzt sind.

Zwischen dem Verbindungshebel 10 und dem Ständer 2 ist ein Anschlaghebel 32 vorgesehen, der mit seinem einen Ende mittels einer Befestigungsachse 34 am Ständer 2 verschwenkbar festgelegt ist, und der mit seinem zweiten Ende 36 am zugehörigen Verbindungshebel 10 linear beweglich geführt ist, was durch den Pfeil 38 angedeutet ist.

Mit dünnen strichpunktierten kreisbogenartigen Linien 54, 56 bzw. 60 sind die Bewegungsbahnen der Befestigungsachse 18 um die Befestigungsachse 16 als Mittelpunkt, die Schwenkbewegung der Befestigungsachse 28 um die Befestigungsachse 26 als Mittelpunkt und die Schwenkbewegung des zweiten Endes 36 des Anschlaghebels 32 um seine Befestigungsachse 34 herum zwischen der zusammengeschwenkten Lagerstellung und der aufgeschwenkten Benutzungsstellung der Bildwandtrommel 4 bezeichnet. Zur genau definierten Begrenzung der linearen Beweglichkeit des zweiten Endes 36 des Anschlaghebels 32 ist es zweckmäßig, wenn der zugehörige Verbindungshebel 10 mit wenigstens einem Anschlag 60 versehen ist, durch den die aufgeschwenkte Benutzungsstellung der Bildwandtrommel 4 definiert wird. Ein zweiter Anschlag 62 kann am Verbindungshebel 10 vorgesehen sein, um die lineare Beweglichkeit des zweiten Endes 36 des Anschlaghebels 32 beim Zusammenschwenken der Bildwandtrommel 4 zum Ständer 2 hin, d.h. die zusammengeschwenkte Lagerstellung der Bildwandtrommel 4 am Ständer 2 festzulegen.

Mit der Bezugsziffer 44 ist auch in Fig. 5 der Hängeträger bezeichnet, an welchem die Bildwand 43 (sh. die Figuren 1 und 3) mit ihrem oberen Randabschnitt festgelegt ist.

## Patentansprüche

1. Stehlampe mit einem Ständer (2, 4) und mindestens einer an dem Ständer befestigten Leuchte (5),
**dadurch gekennzeichnet,**
daß an dem Ständer (2) eine Bildwandtrommel (4), die zur Aufnahme einer Bildwand (43) zum Vorführen von Filmen, Dias u.dgl. bestimmt ist, befestigt ist und einen integralen Teil des Ständers bildet.

2. Stehlampe nach Anspruch 1,
**dadurch gekennzeichnet,**
daß die Bildwandtrommel (4) mit dem Ständer (2) mittels zweier Verbindungshebel (8, 10) zwischen einer im verstauten Zustand der Bildwand (43) parallel zum Ständer (2) orientierten Lagerstellung und einer quer zum Ständer (2) orientierten Benutzungsstellung verschwenkbar verbunden ist, wobei die beiden Verbindungshebel (8, 10) am Ständer (2) derartig angeordnet sind, daß die Bildwandtrommel (4) in der Benutzungsstellung von dem in der Lagerstellung der Bildwandtrommel (4) festgelegten Mittelpunkt nach unten verlagert ist.

3. Stehlampe nach Anspruch 2,
**dadurch gekennzeichnet,**
daß die beiden Verbindungshebel (8, 10) ungleich lang sind und ihre Befestigungsachsen (16, 26), mit welchen sie am Ständer (2) schwenkbeweglich angeordnet sind, voneinander beabstandet sind.

4. Stehlampe nach Anspruch 2,
**dadurch gekennzeichnet,**
daß zwischen einem der Verbindungshebel (10) und dem Ständer (2) ein die Verschwenkbewegung der Bildwandtrommel (4) begrenzender und ihre Benutzungsstellung festlegender Anschlaghebel (32) vorgesehen ist.

5. Stehlampe nach Anspruch 4,
**dadurch gekennzeichnet,**
daß der Anschlaghebel (32) am Ständer (2) um eine Befestigungsachse (34) verschwenkbar angeordnet und am zugehörigen Verbindungshebel (10) linear beweglich geführt ist.

6. Stehlampe nach Anspruch 1,
**dadurch gekennzeichnet,**
daß die Bildwandtrommel (4) um eine angenähert horizontale Achse (3) an dem Ständer derart schwenkbar befestigt ist, daß sie sich im Benutzungszustand der Bildwand (43) quer zu dem Ständer (2) und im verstauten Zustand der Bildwand parallel zu dem Ständer erstreckt.

7. Stehlampe nach Anspruch 6,
**dadurch gekennzeichnet,**
daß die Befestigungsstelle (3) der Bildwandtrommel (4) an dem Ständer (2) in einem unteren Ständerabschnitt (21) vorgesehen ist und daß im oberen Ständerabschnitt (22) eine Befestigungsvorrichtung (42) zum Befestigen der Bildwand (43) angeordnet ist.

8. Stehlampe nach Anspruch 7,
**dadurch gekennzeichnet,**
daß der die Befestigungsvorrichtung aufweisende obere Ständerabschnitt (22) in einer zu der Bildwandebene annähernd senkrechten Ebene schwenkbar an dem Ständer befestigt und in mindestens einer Schwenkstellung sowie einer mit dem Ständer fluchtenden Stellung verrastbar ist.

9. Stehlampe nach Anspruch 7 oder 8,
**dadurch gekennzeichnet,**
daß die Befestigungsvorrichtung durch eine oder mehrere, zur Bildwandseite des Ständers (2) hin offene Ausnehmungen (24) des oberen Ständerabschnitts (22) gebildet ist, in welche ein oberer Hängeträger (44) der Bildwand (43) einhängbar ist.

10. Stehlampe nach einem der Ansprüche 1 bis 9,
**dadurch gekennzeichnet,**
daß die Leuchte (5) der Stehlampe an dem oberen Ständerabschnitt (22) befestigt ist.

11. Stehlampe nach Anspruch 10,
**dadurch gekennzeichnet,**
daß die Leuchte an einem gesonderten Leuchtenträger (52) befestigt ist, der relativ zu dem Ständer (2, 22) schwenkbar ist.

12. Stehlampe nach einem der Ansprüche 8 bis 11,
**dadurch gekennzeichnet,**
daß der Leuchtenträger (52) am oberen Ende des schwenkbaren oberen Ständerabschnitts (22) befestigt ist.

13. Stehlampe nach einem der Ansprüche 1 bis 9,
**dadurch gekennzeichnet,**
daß die Leuchte (5) der Stehlampe an der Bildwandtrommel (4) befestigt ist.

14. Stehlampe nach Anspruch 13,
**dadurch gekennzeichnet,**
daß die Leuchte an dem Endabschnitt der Bildwandtrommel befestigt ist, der in dem in die Vertikallage geschwenkten Zustand der Bildwandtrommel bei Nichtbenutzung der Bildwand den oberen Ständerabschnitt bildet oder diesem benachbart ist.

15. Stehlampe nach Anspruch 13,
**dadurch gekennzeichnet,**
daß die Leuchte(n) der Stehlampe im Längsverlauf der Bildwandtrommel befestigt und so gerichtet ist (sind), daß sie im Benutzungszustand der Bildwand außerhalb der Bildwandebene liegt (liegen).

16. Stehlampe nach einem der Ansprüche 1 bis 15,
**dadurch gekennzeichnet,**
daß der obere Hängeträger (44) der Bildwand als Griffmulde zum Herausziehen der Bildwand aus der Bildwandtrommel ausgebildet und in seiner Form der Bildwandtrommel derart angepaßt ist, daß er im aufgewickelten Zustand der Bildwand einen Teil der Umfangsfläche der Bildwandtrommel bildet.

17. Stehlampe nach einem der Ansprüche 6 bis 16,
**dadurch gekennzeichnet,**
daß die Bildwandtrommel an dem Ständer auch in dessen Längsrichtung verstellbar angebracht ist.

18. Stehlampe nach Anspruch 17,
**dadurch gekennzeichnet,**
daß das Ende (41) der Bildwandtrommel, das in dem in die Vertikallage geschwenkten Zustand der Bildwandtrommel unten ist, auf einen Fuß (1) der Stehlampe zur Unterstützung der Stützfunktion des Ständers aufstellbar ist.

19. Stehlampe nach Anspruch 17 oder 18,
**dadurch gekennzeichnet,**
daß das Ende der Bildwandtrommel, das in dem in die Vertikallage geschwenkten Zustand der Bildwandtrommel unten ist, zur Unterstützung der Stützfunktion des Ständers in eine Ausnehmung des Fußes der Stehlampe einfügbar ist.

20. Stehlampe nach Anspruch 18 oder 19,
**dadurch gekennzeichnet,**
daß der Fuß der Stehlampe lösbar an dem Ständer befestigt ist.

21. Stehlampe nach Anspruch 20,
**dadurch gekennzeichnet,**
daß der Fuß teilbar ist.

22. Stehlampe nach Anspruch 1,
**dadurch gekennzeichnet,**
daß der Ständer einen oberen Ständerabschnitt aufweist, der an dem oberen Ende eines unteren Ständerabschnitts, welcher die Bildwandtrommel trägt, schwenkbar und zumindest in der mit dem unteren Ständerabschnitt fluchtenden Schwenkstellung verrastbar ist, und daß die Bildwandtrommel unschwenkbar quer zum unteren Ständerabschnitt angeordnet ist und die Leuchte(n) der Stehlampe trägt.
